(19) Europäisches Patentamt

European Patent Office

Office européen des brevets

(11) Veröffentlichungsnummer: **0 482 269 A1**

# EUROPÄISCHE PATENTANMELDUNG

(21) Anmeldenummer: **90710030.9**

(22) Anmeldetag: **27.10.90**

(51) Int. Cl.⁵: **B03B 9/00**

(43) Veröffentlichungstag der Anmeldung:
**29.04.92 Patentblatt 92/18**

(84) Benannte Vertragsstaaten:
**AT BE CH DE DK ES FR GB GR IT LI LU NL SE**

(71) Anmelder: **Kreyenberg, Heiner, Dipl.-Ing.**
**Waldseestrasse 31**
**W-4030 Ratingen 4(DE)**

(72) Erfinder: **Kreyenberg, Heiner, Dipl.-Ing.**
**Waldseestrasse 31**
**W-4030 Ratingen 4(DE)**

(74) Vertreter: **Patentanwälte Dipl.-Ing. Alex**
**Stenger Dipl.-Ing. Wolfram Watzke Dipl.-Ing.**
**Heinz J. Ring**
**Kaiser-Friedrich-Ring 70**
**W-4000 Düsseldorf 11(DE)**

(54) Verfahren und Vorrichtung zum Aufbereiten von Ablagerungen.

㊼ Ein Verfahren sowie eine Vorrichtung zum Aufbereiten von Ablagerungen, insbesondere von Sedimenten und dabei insbesondere von Sedimenten bei der Gewässerausbaggerung, von Abraummaterial oder dgl. sieht vor, daß das zu behandelnde Material in aufeinanderfolgenden Stufen klassiert und insbesondere von Schadstoffen gereinigt wird. Um auch bindiges Gut verarbeiten zu können, wird dieses in einem vorgeschalteten Schwertwäscher (4) gereinigt.

EP 0 482 269 A1

Die Erfindung betrifft ein Verfahren zum Aufbereiten von Ablagerungen, insbesondere von Sedimenten und dabei insbesondere von Sedimenten bei der Gewässerausbaggerung, von Abraummaterial oder dgl., bei dem das zu behandelnde Material in aufeinanderfolgenden Stufen klassiert und insbesondere von Schadstoffen gereinigt wird. - Die Erfindung betrifft weiterhin eine Vorrichtung zur Durchführung des Verfahrens.

Ein besonderes Anwendungsgebiet der Erfindung ist die Aufbereitung von Sedimenten, die beim Ausbaggern von Gewässern anfallen, also beispielsweise aus Binnenseen, Flüssen, Wasserstraßen (Kanälen) etc. Ein weiteres Anwendungsgebiet der Erfindung ist die Aufbereitung von Abraummaterial, wie es beispielsweise in Abraumhalden gelagert ist. Der Anwendungsbereich der Erfindung ist jedoch nicht auf die Aufbereitung derartiger Materialien beschränkt. Vielmehr ist unter der Aufbereitung von Ablagerungen sämtliches Material zu verstehen, welches dem erfindungsgemäßen Prozeß theoretisch unterworfen werden kann, um mit ihnen die gleichen Effekte zu erzielen, wie sie beispielsweise bei den bei der Gewässerausbaggerung anfallenden Sedimenten erzielt werden. Insbesondere sind dabei unter den erfindungsgemäßen Ablagerungen Materialien zu verstehen, welche nach der Aufbereitung weiterverarbeitet werden sollen und die aus Feinstgut, Feingut sowie Grobgut zusammengesetzt sind.

Das Verfahren zum Aufbereiten von Ablagerungen in Form von bei der Schlammentnahme aus Gewässern anfallenden Sedimenten der eingangs angegebenen Art ist aus der DE-PS 36 20 700 bekannt. Dabei wird das zu behandelnde Material in aufeinanderfolgenden Stufen voneinander getrennt und insbesondere von Schadstoffen gereinigt, so daß die daraus gewonnenen Fraktionen der Heiterverwertung zugeführt werden können.

Das bekannte Verfahren zum Aufbereiten von Ablagerungen ist brauchbar im Falle der Behandlung von Sedimenten und/oder schwach bindigen Böden. Bei der Bearbeitung von stark bindigen, stark tonhaltigen Materialien ist das bekannten Verfahren jedoch nicht optimal einsetzbar, da in den Waschprozessen innerhalb der Waschtrommel und durch die Hochdruckbedüsung auf dem Klassierdeck diese stark bindigen Gemenge aus Steinen und Tonen und/oder Lehmen nicht ausreichend entmischt werden, so daß ein nicht klassierfähiger Klumpen bleibt. Da es aber in den meisten Fällen um die Klassierung kontaminierter Bodenmassen geht, ist es unabdingbar, daß diese Lehmklumpen aufgelöst und das Gemenge nach den vorhandenen Fraktionen zur Schadstoffisolation in der Feinstfraktion behandelt wird. Es ist dabei aus der Sicht der Weiterverwertung der Fraktionen wesentlich, daß die Sand- und Kiesfraktionen keine anhaftenden Feinstpartikel aufweisen, wobei sichergestellt sein muß, daß die Kornverteilungskurve des Sandes keine Anteile an Korn <0,063 mm aufweist. Die 0,063 mm sind dabei die physikalische Begrenzung der Adhäsionsbindung zwischen Korn und Schadstoffpartikeln. Zusammengefaßt ist es somit unter der Prämisse der Aufbereitung von kontaminiertem Material wesentlich, daß die belastete Feinstfraktion mit einer Kornverteilung <0,063 mm von den Oberflächen der Sande, Kiese und Steine abgewaschen wird.

Ein weiteres Problem bei Sedimenten beispielsweise aus Bundeswasserstraßen ist der Umstand, daß in dem Baggergut als Schutz der Tonschicht dienende Steine enthalten sind, die eine größere Kantenlänge als die gewünschten 50 mm aufweisen. Darüber hinaus sind diese Steine mit Lehm und/oder Ton umhüllt, wobei die Feinstfraktion Schadstoffe beinhaltet. Es gilt daher, die schadstoffhaltige Feinstfraktion von den Steinen abzubekommen und abzuwaschen. Ein Problem dabei ist, daß die tonigen Partikel wie ein Teig zusammenpappen.

Davon ausgehend liegt der Erfindung die **Aufgabe** zugrunde, ein verbessertes Aufbereitungsverfahren zu schaffen, welches auch in der Lage ist, problematische Ablagerungen zu behandeln; ferner soll eine Vorrichtung zur Durchführung des Verfahrens geschaffen werden.

Als technische **Lösung** wird mit der Erfindung verfahrensmäßig vorgeschlagen, daß das in dem zu behandelnden Material enthaltene, vorzugsweise mit Steinen durchsetzte und mit Schadstoffen kontaminierte bindige Gut gereinigt wird.

Ein derartiges Verfahren zum Aufbereiten von Ablagerungen hat den Vorteil, daß auch bindiges Material, bei dem die tonigen Partikel wie ein Teig zusammenpappen, in wirtschaftlicher Weise einer zweckdienlichen Aufbereitung unterworfen werden kann. Das gereinigte bindige Gut kann dann herkömmlichen Aufbereitungsverfahren zugeführt werden, da es in den meisten Fällen beim Aufbereiten von derartigen Ablagerungen um die Klassierung kontaminierter Bodenmassen geht. Dabei werden die Lehmklumpen erfindungsgemäß zunächst aufgelöst und das Gemenge nach den vorhandenen Fraktionen zur Schadstoffisolation in der Feinstfraktion behandelt. Im Hinblick auf eine Verwertung der Ablagerungen weist dann die Sand- und Kiesfraktion keine anhaftenden Feinstpartikel auf, welche mit Schadstoffen kontaminiert sind.

In einer Weiterbildung des erfindungsgemäßen Verfahrens wird vorgeschlagen, daß die Reinigung in einer Vorstufe durchgeführt wird. Durch die Behandlung in einer Vorstufe wird somit den eigentlichen Stufen nur derartiges Material zugeführt, welche derartige Stufen auch behandeln können, ohne daß es durch bindiges Material zu Störungen kommen kann.

Vorzugsweise wird die Reinigung unter Reibung der Steine aneinander durchgeführt. Dadurch wird ein Schruppeffekt erzeugt mit der Folge, daß die anhaftenden Partikel schnell und zuverlässig abgerieben werden.

Eine weitere bevorzugte Weiterbildung schlägt vor, daß die Reinigung mechanisch unter Wasserzugabe durchgeführt wird. Durch die Wasserzugabe wird die Plastizität der bindigen Fraktion (Lehm und/oder Ton) von steif bis fest zu flüssig bis breiig verändert. Das bindige Gut wird somit aufgelöst und die entstehende Trübe kann abgeführt werden. Die Lehmknollen als solche werden aufgelöst, suspendiert und die am Stein anhaftenden Lehmpartikel werden abgerieben, so daß der Stein als vorgewaschenes Material herauskommt.

In einer bevorzugten Weiterbildung des erfindungsgemäßen Verfahrens wird vorgeschlagen, daß die für die Reinigung zu großen Steinen zuvor zerkleinert werden. Durch die Zerkleinerung der großen Steine werden diese verarbeitungsfähig, was ohne die Zerkleinerung nicht möglich wäre. So werden unterhalb einer Größe von 80 mm die Steine förderfähig.

Dabei wird vorzugsweise vor der Reinigungsstufe das aufgegebene Material zunächst gesiebt, wobei das durchgesiebte Gut direkt der Reinigung zugeführt wird, während die zu großen Steine erst zerkleinert werden. Auf diese Weise wird eine Verfahrensoptimierung geschaffen, da zum Zerkleinern nur diejenigen Bestandteile in eine entsprechende Einrichtung gelangen, welche auch zerkleinert werden müssen, da sie zu groß sind.

Schließlich wird in einer Weiterbildung des erfindungsgemäßen Verfahrens vorgeschlagen, daß die magnetisierbaren Teile abgeschieden werden. Dadurch werden auf einfache Weise diejenigen Teile abgeschieden, welche ansonsten den Klassifizierungs- und Reinigungsprozeß stören würden.

Ausgehend von einer Vorrichtung mit Einrichtungen zum Klassieren und Reinigen des zu behandelnden Materials wird zur Durchführung des erfindungsgemäßen Verfahrens mit der Erfindung vorrichtungsmäßig ein Schwertwäscher vorgeschlagen.

Bei dem Schwertwäscher kann es sich um einen herkömmlichen Typ handeln, der lediglich dazu in der Lage sein muß, das bindige Material auflösen zu können. Der üblicherweise in Längsachse leicht angestellte Schwertwäscher vermischt das im oberen Bereich zugeführte Wasser mit dem Lehm und/oder Ton und verändert somit die Plastizität der bindigen Fraktion von steif bis fest zu flüssig bis breiig. Die entstandene Trübe kann aufgrund des ansteigenden Geräte- und Materialbettes oberflächlich über Wehrscheiben in ein Trübebehältnis abfließen und der Zuführpumpe in Form einer Baggerpumpe und dabei insbesondere in Form einer Panzerpumpe zugeleitet werden. Im sogenannten Oberwasserbereich werden durch die gerichteten Schwerter die abgereinigten Kiese oder Schotter ausgetragen und über Bandförderer beispielsweise einer Waschtrommel zugeführt. Die Lehmknollen werden somit mittels des Schwertwäschers aufgelöst, suspendiert und am Stein anhaftende Lehmklumpen werden abgerieben, so daß der Stein als vorgewaschenes Material aus dem Schwertwäscher herauskommt.

Bei dem Schwertwäscher kann es sich um einen Einwellen- oder Doppelwellenschwertwäscher handeln.

Vorzugsweise bilden die Schwertblätter des Schwertwäschers eine steigende Spirale mit größer werdendem Abstand. Dadurch wird die Wäsche intensiviert und es entstehen keine Blockaden zwischen den Schwertern, den Steinen und dem Boden.

Aufgrund der bei kontinuierlichen Baggersystemen auftretenden erheblichen Verschleißerscheinungen und der dadurch hervorgerufenen Stillstände wird in einer Weiterbildung der erfindungsgemäßen Vorrichtung eine Chargenbeschickung des Schwertwäschers vorgeschlagen.

In einer Weiterbildung wird vorgeschlagen, daß der Schwertwäscher vor den Einrichtungen zum eigentlichen Klassieren und Reinigen geschaltet ist, So daß diesen Einrichtungen nur Material zugeführt wird, welches diese auch verarbeiten können.

Vorzugsweise ist dem Schwertwäscher ein Zerkleinerer für die für den Schwertwäscher zu großen Steine vorgeschaltet. Der Zerkleinerer zerkleinert die Steine dabei beispielsweise auf eine Größe von unterhalb 80 mm, da dann die zu zerkleinernden Steine auch hydraulisch förderfähig sind. Ansonsten wären die nicht zerkleinerten Steine ohne diese Vorbehandlung nicht verarbeitungsfähig. Vorzugsweise ist der Zerkleinerer ein Backenbrecher. Dieser hat sich als verschleißarmes Gerät bei der Zerkleinerung von Wasserbausteinen oder Grauwacke, Basalt, Granit, Kalkstein etc. bewährt.

In einer bevorzugten Weiterbildung der erfindungsgemäßen Vorrichtung zur Durchführung des Verfahrens wird vorgeschlagen, daß dem Schwertwäscher ein Sieb vorgeschaltet ist, dem sämtliches Material aufgebbar ist, wobei das nicht durch das Sieb durchgelassene Gut zunächst dem Zerkleinerer zuführbar und das durchgelassene Material direkt dem Schwertwäscher aufgebbar ist. Dadurch läuft sämtliches Material durch den Schwertwäscher, so daß das gesamte Material, welches den nachfolgenden Stufen zugeführt wird, zunächst unter Auflösung der Klumpen gereinigt wird.

Vorzugsweise handelt es sich bei dem Sieb um ein Mehrdecksieb mit hochfrequenter Schwingung. Auf dem Oberdeck sind dabei beispielsweise Stangensizer mit Divergenzspalt bestens in der Lage, Steine von 100 mm Kantenlänge und größer abzuscheiden. Das Zwischendeck sollte dann vorzugsweise mit einem Harfensieb von 35 bis 38 mm Maschenweite belegt sein. Damit können Grobkiesanteile zusätzlich ausgeschieden und mit den Wasserbau steinen im nachgeschalteten Brecher auf die vermarktungsfähige Korngröße gebrochen werden. Im Unterdeck der Siebmaschine werden auf einem Transportband die mit Kieskorn angereicherten bindigen Böden aufgenommen und zusammen mit den gebrochenen Steinen über Förderbandanlagen zu einem Vorratsbunker transportiert.

Alternativ zum Sieb kann dem Schwertwäscher eine Waschtrommel zur Trennung von Grobbestandteilen und Feinbestandteilen vorgeschaltet sein, wobei die Grobbestandteile dem Zerkleinerer und dann dem Schwertwäscher zuführbar sind, während die Feinbestandteile direkt dem Schwertwäscher zuführbar sind.

In einer Weiterbildung der erfindungsgemäßen Vorrichtung wird vorgeschlagen, daß für den Steintransport nach dem Schwertwäscher Gummitransportbänder vorgesehen sind. Weiterhin sind die verflüssigten Lehme und/oder Tone im Anschluß an den Schwertwäscher durch gegen Erosion geschützte Leitungen geführt. Schließlich sind die Förderpumpen vorzugsweise gepanzert. Alle diese Maßnahmen haben den Vorteil, daß die mechanische Beanspruchung dieser Aggregate auf ein Minimum begrenzt wird.

Schließlich wird in einer Weiterbildung der erfindungsgemäßen Vorrichtung eine Abscheideeinrichtung für magnetisierbares Material vorgeschlagen. Dadurch wird das zu behandelnde Material von Bestandteilen befreit, welche ohnehin nicht den eigentlichen Behandlungsstufen zugeführt werden können, da für sie eine Weiterverwertung im Sinne der Erfindung nicht möglich ist.

Ausführungsbeispiele des erfindungsgemäßen Verfahrens werden nachfolgend anhand der Zeichnungen beschrieben. In diesen zeigt:

Fig. 1    eine erste Ausführungsform des erfindungsgemäßen Verfahrens in einer schematischen Darstellung;

Fig. 2    eine zweite Ausführungsform des erfindungsgemäßen Verfahrens in einer schematischen Darstellung;

Fig. 3    eine Seitenansicht des Schwertwäschers der Anlagen;

Fig. 4    einen Schnitt durch den Schwertwäscher in Fig. 3;

Fig. 5    eine Darstellung des Zerkleinerers der Anlagen.

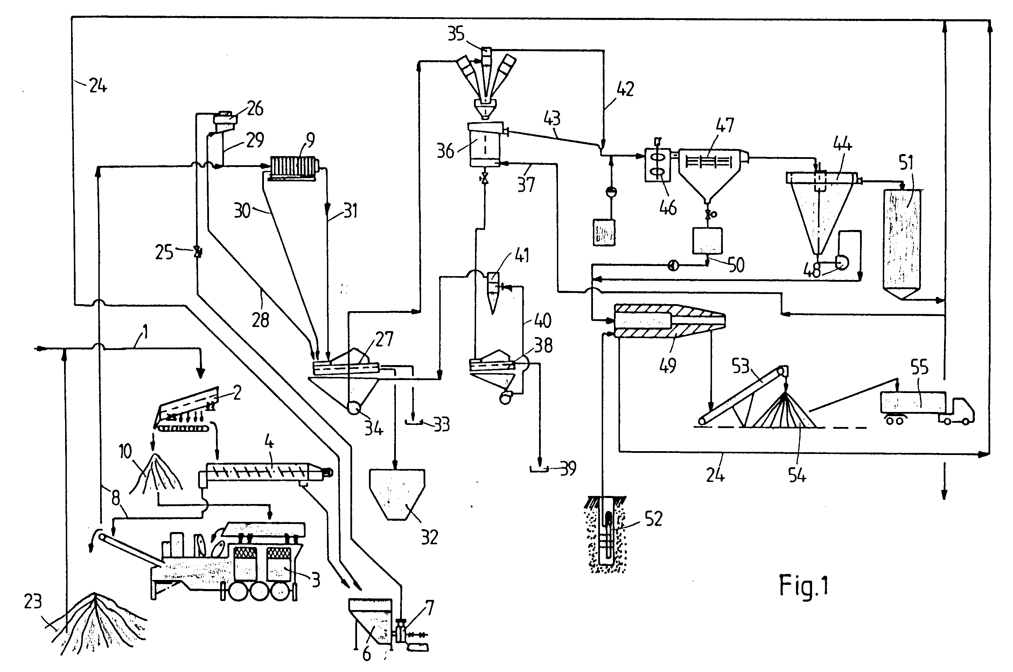

Die Anlage der in Fig. 1 dargestellten ersten Ausführungsform weist zunächst eine in der Zeichnung nicht dargestellte Entnahmevorrichtung für die zu behandelnden Ablagerungen auf, bei denen es sich im Ausführungsbeispiel um bei der Gewässerausbaggerung anfallende Sedimente handelt. Die Entnahmevorrichtung kann beispielsweise ein Schneidkopfsaugbagger oder vergleichbare Geräte sein. Die Palette der in den Sedimenten enthaltenen Stoffe reicht von Feinstpartikeln bis zu sehr großen Steinen, wie sie beispielsweise in Bundeswasserstraßen, d.h. Kanälen als schützende Abdeckung verwendet werden.

Die gewonnenen Sedimente werden über eine Aufgabeleitung 1 einem Sieb 2 in Form eines Mehrdecksiebes mit hochfrequenter Schwingung aufgegeben. Auf dem Oberdeck sind dabei sogenannte Stangensizer mit Divergenzspalt in der Lage, Steine von 100 mm Kantenlänge und größer abzuscheiden. Das Zwischendeck ist vorzugsweise mit einem Harfensieb von 35 bis 38 mm Maschenweite belegt. Damit können Grobkiesanteile zusätzlich ausgeschieden und mit den Wasserbausteinen des Kanals in einem nachgeschalteten Zerkleinerer 3 auf die vermarktungsfähige Korngröße gebrochen werden.

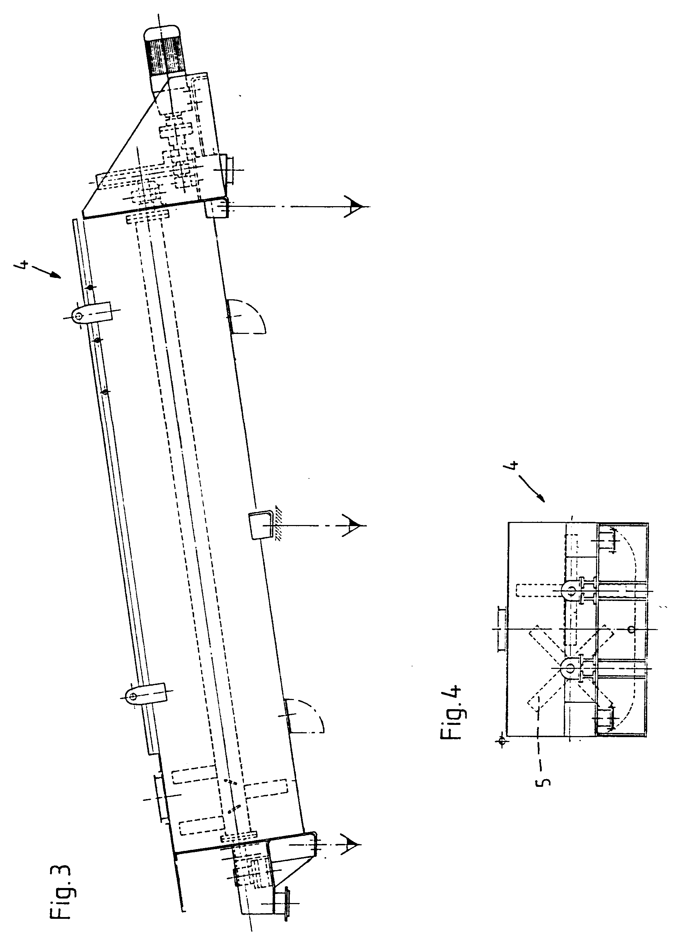

Dasjenige Gut, welches das Sieb 2 passiert hat, wird einem Schwertwäscher 4 zugeführt. Dieser dient dem Auflösen von stark bindigen, stark tonhaltigen Materialien, da diese Klumpen ansonsten nicht dem weiteren Verfahrensablauf zugeführt werden könnten. Aus diesem Grunde ist der Schwertwäscher 4 vorgesehen, welcher diese Klumpen auflösen soll. In Fig. 3 sowie in Fig. 4 ist dieser Schwertwäscher 4 vergrößert dargestellt. Er ist in Längsachse leicht angestellt und vermischt das im oberen Bereich zugeführte Wasser mit dem Lehm und/oder Ton und verändert somit die Plastizität dieser bindigen Fraktion von steif bis fest zu flüssig bis breiig. In Fig. 4 ist dabei zu erkennen, daß es sich bei dem Schwertwäscher 4 um einen Doppelwellenschwertwäscher handelt, bei dem die Schwertblätter 5 ineinandergreifen und miteinander kämmen und eine steigende Spirale mit größer werdendem Abstand bilden. Der Schwertwäscher 4 wäscht somit das bindige sowie mit Steinen durchsetzte Gut unter Zugabe von Prozeßwasser auf intensive, mechanische Weise. Die entstandene Trübe kann aufgrund des ansteigenden Geräte- und Materialbettes oberflächlich über Wehrscheiben in ein Trübebehältnis 6 abfließen und einer Zuführpumpe 7 (Baggerpumpe) zugeleitet werden. Im "Oberwasserbereich" werden durch die gerichteten Schwertblätter 5 die gereinigten Kiese oder Schotter ausgetragen und über Bandförderer 8 zu einer Waschtrommel 9 transportiert.

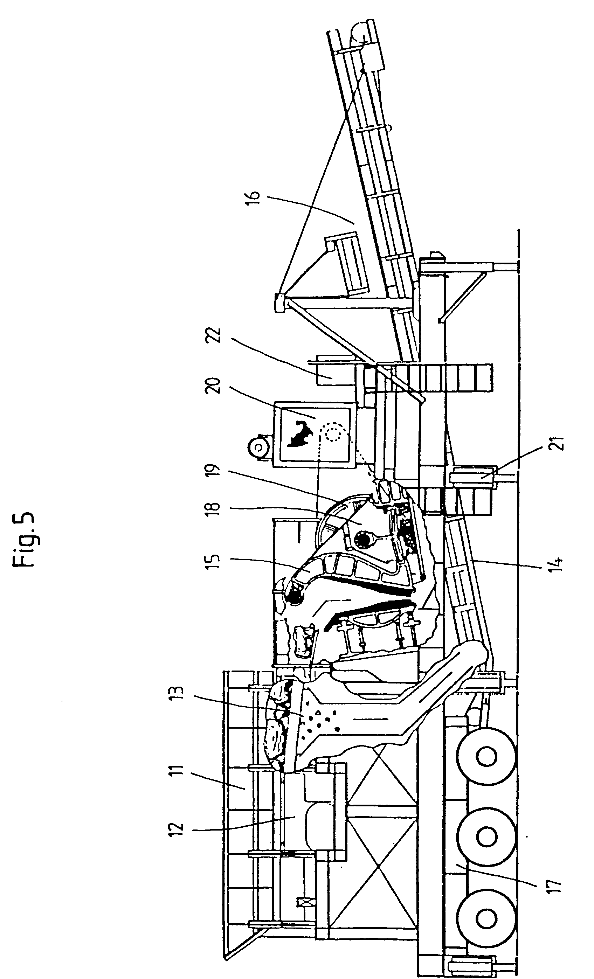

Dasjenige Gut, welches das Sieb 2 nicht passiert hat, wird unter Zwischenlagerung auf einer Halde 10 dem Zerkleinerer 3 zugeführt, welcher als Backenbrecher ausgebildet und in Fig. 5 detaillierter dargestellt ist. Das zu brechende Material wird dabei in einen Aufgabetrichter 11 eingegeben. Ein Vibrationsaufgeber 12 befördert das Rohmaterial auf die Gestänge eines Siebbodens 13. Das so vorgesiebte Gut fällt entweder durch einen zentralen Kanal direkt auf ein Hauptabzugsband 14 oder es kann seitlich auf einem zusätzlichen Abzugsband ausgeschieden werden. Das Material wird dabei ohne Reibung zwischen den Backen 15 gebrochen und fällt unmittelbar auf das darunterliegende Hauptabzugsband 14. Ein ständig eingeschalteter Magnetabscheider 16 trennt Eisenteile von dem gebrochenen Gut und scheidet dieses seitlich auf einem weiteren Förderband ab. Der Zerkleinerer 3 in Fig. 5 weist ferner ein 3-Achsen-Fahrwerk 17, ein Antriebssystem 18, ein Antriebsrad 19 mit Überlastsicherung, einen Motor 20, eine Stützwinde 21 sowie schließlich einen elektrischen Generator 22 auf.

Das so zerkleinerte Material wird einer Halde 23 aufgegeben, wobei die Steine im Größenbereich bis zu 80 mm liegen. Die Steine der Halde 23 werden der Aufgabeleitung 1 zugeführt und schließlich über das Sieb 2 in den Schwertwäscher 4 eingeleitet.Sämtliches Material gelangt somit durch den Schwertwäscher 4, auch wenn es zunächst das Sieb 2 nicht passieren konnte. Das im Trübebehälter 6 befindliche Gut, wobei in den Trübebehälter 6 eine Brauchwasserleitung 24 mündet, wird mittels der Zuführpumpe 7 über einen Mengenregler 25 einem Siebzyklon 26 zugeführt. Dieses Siebzyklon 26 bildet zusammen mit der Waschtrommel 9 sowie einem Schwingklassierer 27 eine erste Trennstufe. In dieser ersten Trennstufe erfolgt eine Trennung der anorganischen und organischen Grobbestandteile oberhalb einer Größe von beispielsweise 6 mm von den Feinbestandteilen unterhalb von 6 mm. In dem Siebzyklon erfolgt eine Wasservorabscheidung und Vorabsiebung der Grobbestandteile oberhalb 6 mm, so daß in einer Leitung 28 das vorabgeschiedene Wasser mit Feinbestandteilen unterhalb 6 mm (Feinschlamm) abgeführt und dem Schwingklassierer 27 zugeführt wird. Die im Siebzyklon 26 vorentwässerte Feststoffsuspension mit den Grobbestandteilen wird über eine Leitung 29 der Waschtrommel 9 zugeführt, die mit Schikanen versehen ist. Diese bewirken eine Abscheidung der groben organischen Bestandteile (Holz, Wurzeln etc.) von den groben anorganischen Bestandteilen (Steine, Kies, Sand etc.), wobei der Austrag aus der Waschtrommel 9 separat über die Leitung 30 (organische Bestandteile) und die Leitung 31 (anorganische Bestandteile) erfolgt. Eine weitere, jedoch nicht eingezeichnete Leitung führt von der Waschtrommel 9 zu dem Schwingklassierer 27, und zwar führt diese Leitung die Feinbestandteile unter 6 mm aus der Waschtrommel 9 ab und führt diese dem Schwingklassierer 27 zu.

Der Schwingklassierer 27 besteht aus vier Bahnen, und zwar eine erste Bahn für die Wasservorabscheidung und die Vorabsiebung aus der Leitung 28, eine zweite Bahn für die anorganischen Bestandteile aus der Waschtrommel 9 über die Leitung 31, eine dritte Bahn für die organischen Bestandteile ebenfalls aus der Waschtrommel 9 über die Leitung 30 sowie eine vierte Bahn für die Feinbestandteile unter 6 mm aus der Waschtrommel 9 über die nicht eingezeichnete Leitung. Dabei können auch die erste und die vierte Bahn mit den Feinbestandteilen unter 6 mm zusammengefaßt werden.

Auf den Bahnen des Schwingklassierers 6 werden die Grobbestandteile mehrfach hin- und hergeleitet und von feinen organischen und mineralischen Partikeln gereinigt. Dies gilt insbesondere für die organischen Grobbestandteile, um bei diesen Feinstteile auszuwaschen, die eventuell mit Schwermetallen kontaminiert sind.

Die so gereinigten organischen Bestandteile werden von ihrer entsprechenden Bahn des Schwingklassierers 27 einem Container 32 zugeführt, von wo aus das Holz und die Wurzeln der Verbrennung beispielsweise zur Energiegewinnung oder der Kompostierung zugeführt werden. Die anorganischen Grobbestandteile werden ebenfalls nach deren Reinigung einem Kieslager 33 zugeführt, das Steine größer als 6 mm beinhaltet. Auch der Kies im Kieslager 33 kann ebenso wie das Holz und die Wurzeln der Weiterverwertung zugeführt werden.

Mittels einer Förderpumpe 34 werden die anorganischen und organischen Feinbestandteile unterhalb einer Größe von 6 mm einer (Multi-)Zyklonanlage 35 in Suspension zugeführt. In dieser Zyklonanlage 35 soll eine Abscheidung des Sandes zwischen der Mindestgröße 0,063 und 6 mm erfolgen. Die Zyklonanlage 35 ist dabei ein Schwertrübesortierer 36 in Form eines Wirbelschichtsortierers mit einer Frischwasser- oder Zentratwasser-Zufuhr 37 nachgeschaltet, die den gereinigten Sand über einen Schwingentwässerer 38 einem Sandlager 39 zuführt, das Sand mit einer Größe kleiner als 6 mm aufweist. Das Filtratwasser aus dem Schwingentwässerer 38 wird über eine Leitung 40 über ein Zyklon 41 dem Schwingklassierer 27 rückgeführt.

Die feinen mineralischen Bestandteile unterhalb 0,063 mm, die in der Zyklonanlage 35 nicht ausgeschieden werden können, sowie die organischen Feinbestandteile werden über Leitungen 42 (mineralische Trübe) und 43 (organische Trübe, Schlammwasser) einem Eindicker 44 zugeführt, der in dem dargestellten Ausführungsbeispiel ein Kompressionseindicker ist. Diesem Eindicker 44 ist eine Polymer-Gegenflockungseinrichtung 45, ein Flockulator 46 sowie ein Lamellenklärer 47 vorgeschaltet.

Nach Einlauf der mineralischen und organischen Trüber breitet sich diese im Eindicker 44 aus. Die nicht durch einen Überlauf abgeführten Bestandteile, d.h. die Sande und Schluffe, setzen sich im Eindicker 44 ab und werden aus der unteren Kompressionsspitze mittels einer Pumpe 48 abgezogen und einer Zentrifuge 49 zugeführt. Die Partikelgröße liegt dabei unterhalb von 0,063 mm. In der Zentrifuge 44 mündet weiterhin über eine Leitung 50 das aus dem Lamellenklärer 47 stammende Schlammkonzentrat ebenfalls mit Partikeln unterhalb 0,063 mm. Dem Eindicker 44 ist im übrigen ein Klarwassertank 51 zugeordnet.

Die Zentrifuge 49, welche die dritte Trennstufe nach der Zyklonanlage 35 als zweite Trennstufe bildet, sorgt für eine Entwässerung der zugeführten mineralischen und organischen Trübe sowie der Fällungsstoffe. Die Zentrifuge 49 ist dabei an einen Brunnen 52 angeschlossen. Der durch die Zentrifuge 49 gewonnene Dickschlamm wird beispielsweise über ein Transportband 53 einem Zwischenlager 54 und von dort einem Lastkraftwagen 55 aufgegeben und der Deponierung, Kompostierung, Verbrennung oder dgl. zugeführt. Das Ablaufwasser (Zentrat) aus der Zentrifuge 49 wird als Brauchwasser über die Brauchwasserleitung 24 in den Prozeß rückgeführt.

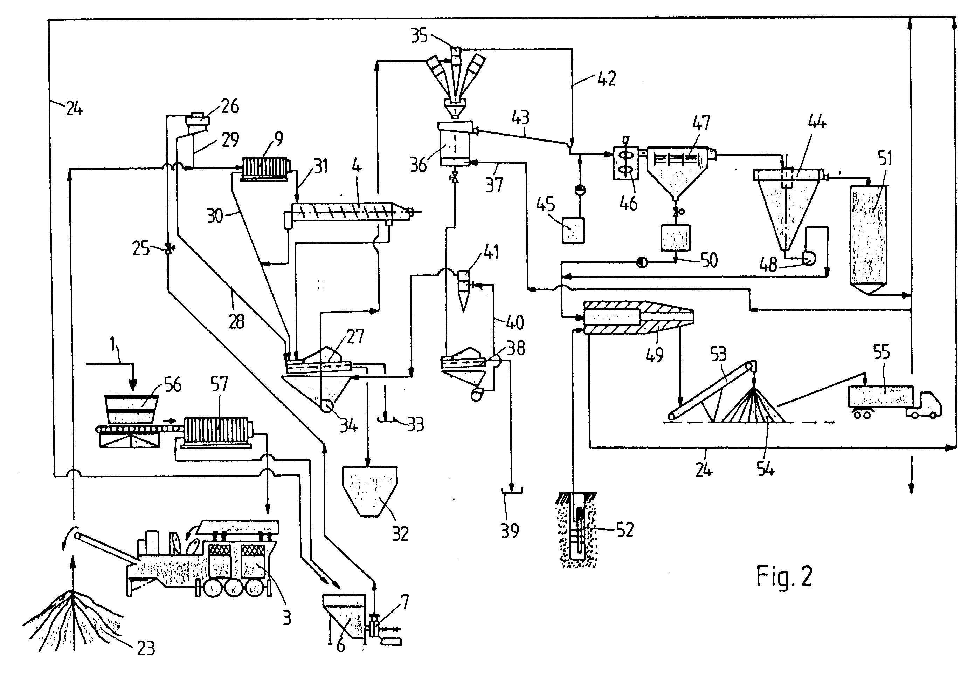

Die zweite Ausführungsform in Fig. 2 unterscheidet sich von der ersten Ausführungsform in Fig. 1 dadurch, daß anstelle des Siebes 2 nach der Aufgabeleitung 1 mit dem Aufgabebunker 56 eine Waschtrommel 57 zur Trennung von Grobbestandteilen und Lehmbestandteilen verwendet wird, wobei die Grobbestandteile wie bei der ersten Ausführungsform einem Zerkleinerer 3 zugeführt werden, während die feinen Lehmbestandteile dem Siebzyklon 26 zugeführt werden. Nach dem Zerkleinern der Grobbestandteile im Zerkleinerer 3 wird das Gut der Waschtrommel 9 zugeführt. Dieser Waschtrommel 9 ist dann der Schwertwäscher 4 in der dargestellten Weise nachgeordnet. Im Anschluß an den Schwertwäscher 4 folgt der Schwingklassierer 27. Diese zweite Ausführungsform in Fig. 2 unterscheidet sich von der ersten Ausführungsform in Fig. 1 lediglich in der etwas anderen Anordnung des Schwertwäschers 4 im Verfahrensablauf verbunden mit der Verwendung einer Waschtrommel 57 anstelle eines Siebes 2. Ansonsten herrscht Übereinstimmung zwischen den beiden Anlagen.

6

| Bezugszeichenliste | | | | |
|---|---|---|---|---|
| 1 | Aufgabeleitung | 30 | Leitung |
| 2 | Sieb | 31 | Leitung |
| 3 | Zerkleinerer | 32 | Container |
| 4 | Schwertwäscher | 33 | Kieslager |
| 5 | Schwertblatt | 34 | Förderpumpe |
| 6 | Trübebehälter | 35 | Zyklonanlage |
| 7 | Zuführpumpe | 36 | Schwertrübesortierer |
| 8 | Bandförderer | 37 | Frischwasser- oder Zentratwasser-Zufuhr |
| 9 | Waschtrommel | | |
| 10 | Halde | 38 | Schwingentwässerer |
| 11 | Aufgabetrichter | 39 | Sandlager |
| 12 | Vibrationsaufgeber | 40 | Leitung |
| 13 | Siebboden | 41 | Zyklon |
| 14 | Hauptabzugsband | 42 | Leitung |
| 15 | Backe | 43 | Leitung |
| 16 | Magnetabscheider | 44 | Eindicker |
| 17 | Fahrwerk | 45 | Gegenflockungseinrichtung |
| 18 | Antriebssystem | 46 | Flockulator |
| 19 | Antriebsrad | 47 | Lamellenklärer |
| 20 | Motor | 48 | Pumpe |
| 21 | Stützwinde | 49 | Zentrifuge |
| 22 | elektrischer Generator | 50 | Leitung |
| 23 | Halde | 51 | Klarwassertank |
| 24 | Brauchwasserleitung | 52 | Brunnen |
| 25 | Mengenregler | 53 | Transportband |
| 26 | Siebzyklon | 54 | Zwischenlager |
| 27 | Schwingklassierer | 55 | Lastkraftwagen |
| 28 | Leitung | 56 | Aufgabebunker |
| 29 | Leitung | 57 | Waschtrommel |

**Patentansprüche**

1. Verfahren zum Aufbereiten von Ablagerungen, insbesondere von Sedimenten und dabei insbesondere von Sedimenten bei der Gewässerausbaggerung, von Abraummaterial oder dgl., bei dem das zu behandelnde Material in aufeinanderfolgenden Stufen klassiert und insbesondere von Schadstoffen gereinigt wird,
**dadurch gekennzeichnet,**
daß das in dem zu behandelnden Material enthaltene, vorzugsweise mit Steinen durchsetzte und mit Schadstoffen kontaminierte bindige Gut gereinigt wird.

2. Verfahren nach Anspruch 1, dadurch gekennzeichnet, daß die Reinigung in einer Vorstufe durchgeführt wird.

3. Verfahren nach Anspruch 1 oder 2, dadurch gekennzeichnet, daß die Reinigung unter Reibung der Steine aneinander durchgeführt wird.

4. Verfahren nach einem der Ansprüche 1 bis 3, dadurch gekennzeichnet, daß die Reinigung mechanisch unter Wasserzugabe durchgeführt wird.

5. Verfahren nach einem der Ansprüche 1 bis 4, dadurch gekennzeichnet, daß die für die Reinigung zu großen Steine zuvor zerkleinert werden.

6. Verfahren nach Anspruch 5, dadurch gekennzeichnet, daß vor der Reinigungsstufe das aufgegebene Material zunächst gesiebt wird und wobei das durchgesiebte Gut direkt der Reinigung zugeführt wird, während die zu großen Steine erst zerkleinert werden.

**7.** Verfahren nach einem der Ansprüche 1 bis 6, dadurch gekennzeichnet, daß die magnetisierbaren Teile abgeschieden werden.

**8.** Vorrichtung zur Durchführung des Verfahrens nach einem der Ansprüche 1 bis 7,
mit Einrichtungen zum Klassieren und Reinigen des zu behandelnden Materials,
**gekennzeichnet durch**
einen Schwertwäscher (4).

**9.** Vorrichtung nach Anspruch 8, dadurch gekennzeichnet, daß der Schwertwäscher (4) ein Einwellen- oder Doppelwellenschwertwäscher ist.

**10.** Vorrichtung nach Anspruch 8 oder 9, dadurch gekennzeichnet, daß die Schwertblätter (5) des Schwertwäschers (4) eine steigende Spirale mit größer werdendem Abstand bilden.

**11.** Vorrichtung nach einem der Ansprüche 8 bis 10, gekennzeichnet durch eine Chargenbeschickung des Schwertwäschers (4).

**12.** Vorrichtung nach einem der Ansprüche 8 bis 11, dadurch gekennzeichnet, daß der Schwertwäscher (4) vor den Einrichtungen zum eigentlichen Klassieren und Reinigen geschaltet ist.

**13.** Vorrichtung nach einem der Ansprüche 8 bis 12, dadurch gekennzeichnet, daß dem Schwertwäscher (4) ein Zerkleinerer (3) für die für den Schwertwäscher (4) zu großen Steine vorgeschaltet ist.

**14.** Vorrichtung nach Anspruch 13, dadurch gekennzeichnet, daß der Zerkleinerer (3) ein Backenbrecher ist.

**15.** Vorrichtung nach Anspruch 13 oder 14, dadurch gekennzeichnet, daß dem Schwertwäscher (4) ein Sieb (2) vorgeschaltet ist, dem sämtliches Material aufgebbar ist, wobei das nicht durch das Sieb (2) durchgelassene Gut zunächst dem Zerkleinerer (3) und das durchgelassene Material direkt dem Schwertwäscher (4) aufgebbar ist.

**16.** Vorrichtung nach Anspruch 15, dadurch gekennzeichnet, daß das Sieb (2) ein Mehrdecksieb mit hochfrequenter Schwingung ist.

**17.** Vorrichtung nach Anspruch 13 oder 14, dadurch gekennzeichnet, daß dem Schwertwäscher (4) eine Waschtrommel (57) zur Trennung von Grobbestandteilen und Feinbestandteilen vorgeschaltet ist, wobei die Grobbestandteile dem Zerkleinerer (3) und dann dem Schwertwäscher (4) zuführbar sind, während die Feinbestandteile direkt dem Schwertwäscher (4) zuführbar sind.

**18.** Vorrichtung nach einem der Ansprüche 8 bis 17, dadurch gekennzeichnet, daß für den Steintransport nach dem Schwertwäscher (4) Gummitransportbänder vorgesehen sind.

**19.** Vorrichtung nach einem der Ansprüche 8 bis 18, dadurch gekennzeichnet, daß die verflüssigten Lehme und/oder Tone im Anschluß an den Schwertwäscher (4) durch gummierte Leitungen geführt sind.

**20.** Vorrichtung nach einem der Ansprüche 8 bis 19, dadurch gekennzeichnet, daß die Förderpumpen gepanzert sind.

**21.** Vorrichtung nach einem der Ansprüche 8 bis 20, gekennzeichnet durch eine Abscheideeinrichtung für magnetisierbares Material.

Fig.1

EP 0 482 269 A1

Fig. 2

Fig.3

Fig.4

Fig. 5

## EUROPÄISCHER RECHERCHENBERICHT

**Europäisches Patentamt**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0325159 (GESU GESELLSCHAFT FUR SAUBERE UMWELT MBH)<br>* Spalte 5, Zeile 17 - Spalte 9, Zeile 50; Figur * | 1-9, 12, 13, 15, 16, 21 | B03B9/00 |
| A | | 17 | |
| | --- | | |
| X | AUFBEREITUNGS TECHNIK.<br>vol. 31, no. 8, August 1990, WIESBADEN DE<br>Seite 458<br>"GAR mit einer neuen Lösung für wirtschaftliche Entsorgung und Haldenaufbereitung"<br>* Seite 458, Spalte 1, Zeile 14 - Spalte 3, Zeile 21 * | 1-6, 8, 9, 12, 13, 15, 16 | |
| | --- | | |
| X | EP-A-0224920 (CORNELIUS ET AL)<br>* Seite 1, Zeile 1 - Seite 2, Zeile 12 *<br>* Seite 6, Zeile 1 - Seite 7, Zeile 25 *<br>* Seite 13, Zeile 24 - Seite 14, Zeile 13; Figuren 1-3 * | 1-4, 8, 9, 12<br>18 | |
| A | | 6, 15, 16 | |
| | | | **RECHERCHIERTE SACHGEBIETE (Int. Cl.5)** |
| | --- | | |
| X | US-A-3856213 (DULANEY ET AL)<br>* Spalte 2, Zeile 8 - Spalte 3, Zeile 33 *<br>* Spalte 4, Zeilen 6 - 32; Figur * | 1-4 | B03B<br>B09B |
| A | | 6, 8, 16 | |
| | --- | | |
| A | DE-B-1166111 (PRUSS)<br>* das ganze Dokument * | 1, 3, 4, 6, 8-10, 15 | |
| | --- | | |
| A | US-A-2753161 (FYE)<br>* Spalte 1, Zeilen 50 - 54 *<br>* Spalte 2, Zeilen 41 - 60; Figuren * | 1, 3, 4, 8, 9 | |
| | --- | | |
| A<br>D | EP-A-0250639 (KREYENBERG)<br>* das ganze Dokument *<br>& DE-A-3620700 | 1, 2, 4, 6, 8 | |
| | --- | | |
| | -/-- | | |

**Der vorliegende Recherchenbericht wurde für alle Patentansprüche erstellt**

| Recherchenort | Abschlußdatum der Recherche | Prüfer |
|---|---|---|
| DEN HAAG | 30 MAI 1991 | VAN DER ZEE W.T. |

Europäisches
Patentamt

**EUROPÄISCHER RECHERCHENBERICHT**

Nummer der Anmeldung

EP 90 71 0030
Seite 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0282621 (KREYENBERG)<br>* das ganze Dokument *<br>----- | 1, 2, 4, 6, 8 | |
| | | | **RECHERCHIERTE SACHGEBIETE (Int. Cl.5)** |

Der vorliegende Recherchenbericht wurde für alle Patentansprüche erstellt

| Recherchenort | Abschlußdatum der Recherche | Prüfer |
|---|---|---|
| DEN HAAG | 30 MAI 1991 | VAN DER ZEE W.T. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

 

& : Mitglied der gleichen Patentfamilie, übereinstimmendes Dokument

EPO FORM 1503 03.82 (P0403)